# EUROPÄISCHE PATENTSCHRIFT

(11) **EP 0 587 014 B1**
(45) Veröffentlichungstag und Bekanntmachung des Hinweises auf die Patenterteilung: **10.04.1996**
(21) Anmeldenummer: 93113877.0
(22) Anmeldetag: 31.08.1993
(51) Int. Cl.: B60N 2/46, B60R 7/04

(54) **Mittelkonsole für Fahrzeuge**
Center console for vehicle
Console centrale pour véhicule

(30) Priorität: 10.09.1992 DE 4230242
(43) Veröffentlichungstag der Anmeldung: 16.03.1994
(73) Patentinhaber: GEBR. HAPPICH GmbH, D-42097 Wuppertal (DE)
(72) Erfinder: Wick, Volkhard, D-42799 Leichlingen (DE); Wegel, Peter, D-42283 Wuppertal (DE); Dabringhaus, Volker, D-42109 Wupperatl (DE)

(56) Entgegenhaltungen:
- DE-A- 3 143 957
- DE-A- 3 700 614
- DE-U- 8 703 849
- US-A- 4 809 897
- US-A- 4 928 865
- US-A- 4 998 770
- PATENT ABSTRACTS OF JAPAN vol. 6, no. 216 (M-168) (1094) 29. Oktober 1982 & JP-A-57 121 946 (NISSAN)

## Beschreibung

Die Erfindung bezieht sich auf eine Mittelkonsole für Fahrzeuge mit einem als nach oben offenes Ablagefach ausgebildeten Grundkörper, einem am Grundkörper angelenkten Abdeckteil, einer Verriegelungsvorrichtung, die nach dem Lösen ein Aufklappen des Abdeckteils erlaubt, einer das Abdeckteil übergreifenden Armlehne, die ebenfalls nach dem Lösen einer Verriegelungsvorrichtung aufklappbar ist, einer Drehachse für das Abdeckteil und mit einer parallel zur Drehachse verlaufenden oder mit dieser zusammenfallenden Drehachse für die Armlehne, wobei die Armlehne wahlweise für sich alleine oder zusammen mit dem Abdeckteil klappbar ist.

Bei einer durch die DE-A- 38 07 880 bekanntgewordenen Mittelkonsole ist an einem, ein nach oben offenes Ablagefach umfassenden Grundkörper ein Abdeckteil für das Ablagefach angelenkt und auf diesem Abdeckteil ist eine Armlehne längsverschiebbar gelagert.

Durch die DE-A- 31 43 957 ist eine Mittelarmlehne für die Vordersitze eines Kraftfahrzeuges bekanntgeworden. Versehen ist die Mittelarmlehne mit einem nach oben offenen Hohlraum, einem an der Armlehne angelenkten Deckel, einer Verriegelungsvorrichtung, die nach dem Lösen ein Aufklappen des Deckels erlaubt, einen den erwähnten Deckel übergreifenden Deckel, der ebenfalls nach dem Lösen einer Verrieglungsvorrichtung aufklappbar ist und einer Drehachse für den ersten und einer dazu parallel verlaufenden oder mit dieser zusammenfallenden Drehachse für den zweiten Deckel, wobei der eine Deckel wahlweise für sich alleine oder zusammen mit dem anderen Deckel klappbar ist. In den Unterlagen der DE-A- 31 43 957 ist offenbart, daß die Verriegelungsvorrichtung für den zwischen der Armlehne und dem äußeren Deckel befindlichen Deckel z.B. aus einem Magnetverschluß, der den Deckel in der Geschlossenstellung hält, bestehen kann. Demgegenüber soll der äußere Deckel mit einem nicht näher definierten Verschluß versehen sein.

Der Erfindung liegt die Aufgabe zugrunde, eine Mittelkonsole der eingangs genannten Art zur Verfügung zu stellen, bei der auf eine längsverschiebbare Lagerung der Armlehne verzichtet und weiterhin angestrebt wird, eine einfach zu bedienende und zuverlässig arbeitende Verriegelungsvorrichtung für das Abdeckteil und für die Armlehne zu erzielen.

Zur Lösung dieser Aufgabe ist bei einer Mittelkonsole für Fahrzeuge eine Verriegelungsvorrichtung vorgesehen, die bei heruntergeklappter Lage von Abdeckteil und Armlehne eine lösbare Festlegung der Armlehne am Grundkörper und gleichzeitig eine lösbare Festlegung des Abdeckteils an der Armlehne ermöglicht und daß durch ein Lösen der Verriegelung zwischen dem Abdeckteil und der Armlehne gleichzeitig eine Verriegelung zwischem dem Abdeckteil und dem Grundkörper herstellbar ist.

Die erfindungsgemäße Mittelkonsole besteht somit aus einem Grundkörper, der ein nach oben offenes Ablagefach umfaßt, welches zur Aufnahme von sperrigen Unterlagen, wie Bordbüchern od.dgl. dienen kann. Das Ablagefach wird durch ein Abdeckteil, das klappbeweglich am Grundkörper angelenkt ist, abgedeckt. Da aber auch das Abdeckteil eine, durch die ebenfalls klappbeweglich gelagerte Armlehne gebildete Abdeckung aufweist, ergibt sich die Möglichkeit, für das Abdeckteil eine schalenförmige Aufnahme einzusetzen, wobei insbesondere an eine Aufnahme für ein Autotelefon gedacht ist. Durch die zur Erfindung gehörende Verriegelungsvorrichtung ist es problemlos möglich, entweder durch Aufklappen der Armlehne an das Autotelefon, das ansonsten durch die Armlehne den Blicken eines Betrachters entzogen ist, oder an das im Grundkörper ausgebildete Ablagefach zu gelangen, wobei Armlehne und Abdeckteil gemeinsam aufgeklappt werden.

In bevorzugter Ausgestaltung der Erfindung ist vorgesehen, daß die Verriegelungsvorrichtung einen am Grundkörper angeordneten Schloßriegel mit einer vorderseitigen und einer rückseitigen Rastausnehmung, zwei an der Armlehne nebeneinander auf einem Gelenkstift schwenkbeweglich gelagerte Griffhebel sowie zumindest einen am Abdeckteil schwenkbeweglich gelagerten Nocken umfaßt, und daß der erste Griffhebel eine in die vorderseitige Rastausnehmung einschwenkbare Sperrklinke aufweist, während der zweite Griffhebel vorderendig mit einem Mitnehmer für den ersten Griffhebel und hinterendig mit einem Zahnsegment ausgebildet ist, das mit dem Zahnsegment einer parallel zum Gelenkstift der Griffhebel ausgerichteten Welle kämmt, die eine Klinke trägt, welche in eine Rastausnehmung im Abdeckteil einschwenkbar ist, um dabei den zumindest einen Nocken zu beaufschlagen und außer Eingriff mit der rückseitigen Rastausnehmung des Schloßriegels zu halten.

In der heruntergeklappten Gebrauchslage der Armlehne ist die Sperrklinke des ersten Griffhebels in der vorderseitigen Rastausnehmung des Schloßriegels eingerastet. Das Abdeckteil geht dabei keine Verrastung mit dem Schloßriegel ein, sondern ist mit der Armlehne auf Mitnahme gekuppelt. Eine Betätigung des ersten Griffhebels bewirkt daher ein Lösen der Armlehnenverriegelung und ermöglicht ein Aufklappen von Armlehne und Abdeckteil. Für ein Hochklappen der Armlehne allein ist der zweite Griffhebel zu betätigen. Hierbei wird durch den vorgesehenen Mitnehmer auch der erste Griffhebel betätigt mit der Folge, daß die Sperrklinke aus der Rastausnehmung des Schloßriegels ausgeklinkt wird. Ferner wird durch die Betätigung des zweiten Griffhebels die Klinke aus der Rastausnehmung im Abdeckteil herausgeschwenkt mit der Folge, daß der zumindest eine Nocken in die rückseitige Rastausnehmung des Schloßriegels einfällt. Die Betätigung des zweiten Griffhebels bewirkt somit ein Lösen der Verriegelung zwischen der Armlehne und dem Abdeckteil und zugleich ein Verriegeln zwischen dem Abdeckteil und dem Grundkörper.

Zur Vereinfachung der Verriegelungs- und Entriegelungsoperationen ist in Weiterbildung der Erfindung vorgesehen, daß die Griffhebel, der zumindest eine Nocken und die die Klinke tragende Welle jeweils gegen die Kraft von Rückstellmitteln, wie Rückstellfedern, betätigbar sind.

Eine weitere Ausgestaltung der Erfindung sieht vor, daß das Abdeckteil und die Armlehne jeweils um die hintere Kante klappbar sind und jeweils am vorderen Ende die Elemente der Verriegelungsvorrichtung tragen, wobei die Klappachsen von Anbauteil und Armlehne parallel zum Gelenkstift der Griffhebel verlaufen, während die Schwenkachse für den zumindest einen Nocken hierzu senkrecht ausgerichtet ist. Ein Hochziehen eines Griffhebels löst die Entriegelung aus und ermöglicht in gleicher Zugrichtung ein Hochklappen der Armlehne oder ein Hochklappen von Armlehne und Abdeckteil, wobei sich im letzteren Falle die Anordnung einer die Aufklappbewegung unterstützenden Gasdruckfeder empfiehlt.

Es ist weiterhin von Vorteil, daß die Griffhebel, der Gelenkstift, die das Zahnsegment sowie die Klinke tragende Welle und die Rückstellmittel für die Griffhebel und Welle gemeinsam in einem, an der Armlehne befestigten Aufnahmegehäuse angeordnet sind. Auch ist es, schon aus Gründen der Symmetrie, aber auch aus Gründen einer spannungsfreien Verriegelung von Vorteil, wenn weiterhin vorgesehen wird, daß zwei in die rückseitige Rastausnehmung des Schloßriegels einschwenkbare Nocken vorgesehen sind, die auf Lagerstiften in einem Aufnahmegehäuse zusammen mit einer die Nocken in Richtung Rastausnehmung belastenden Rückstellfeder angeordnet sind. Dabei können die Nocken bevorzugt als längliche, baugleiche Formkörper ausgebildet sein, die mit jeweils einem Stirnende zahnartig aneinandergekuppelt und mit den anderen freien Endbereichen in die Rastausnehmung des Schloßriegels einschwenkbar sind.

Ein Ausführungsbeispiel der Erfindung wird im folgenden anhand der Zeichnung näher erläutert. Es zeigen:
- Fig. 1: einen vertikalen Längsschnitt durch die Mittelkonsole, nebst Armlehne, Abdeckteil und Verriegelungsvorrichtung,

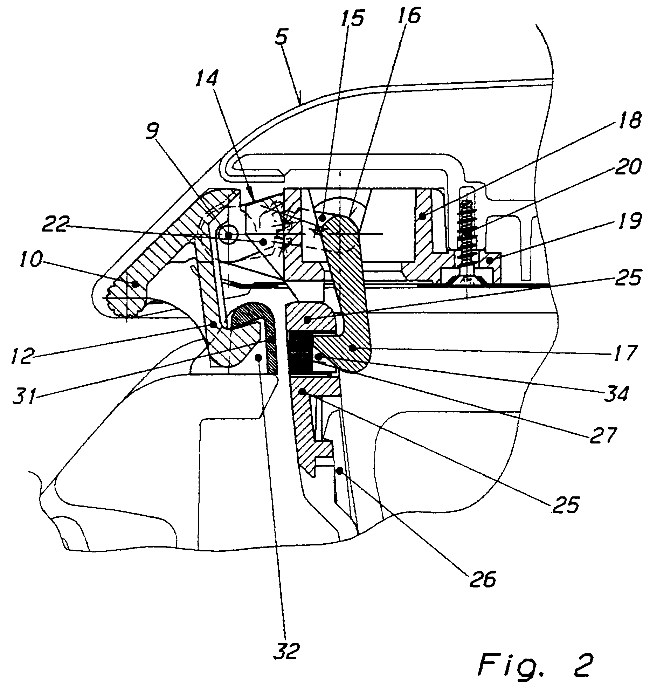

- Fig. 2: eine gegenüber Fig. 1 vergrößerte Schnittdarstellung der Verriegelungsvorrichtung,

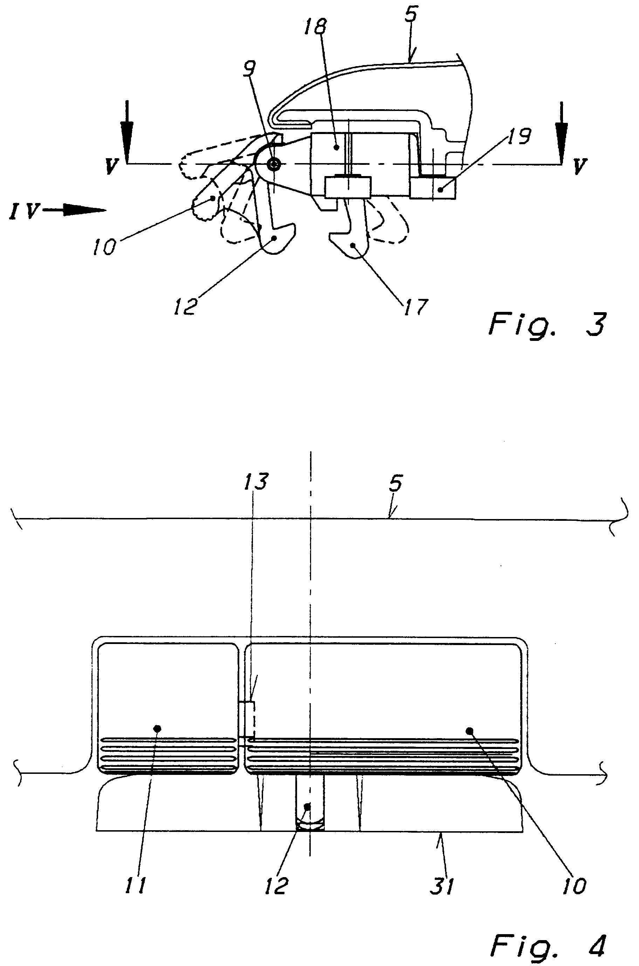

- Fig. 3: eine Seitenansicht eines Teils der Verriegelungsvorrichtung,
- Fig. 4: eine Ansicht in Pfeilrichtung IV nach Fig. 3,

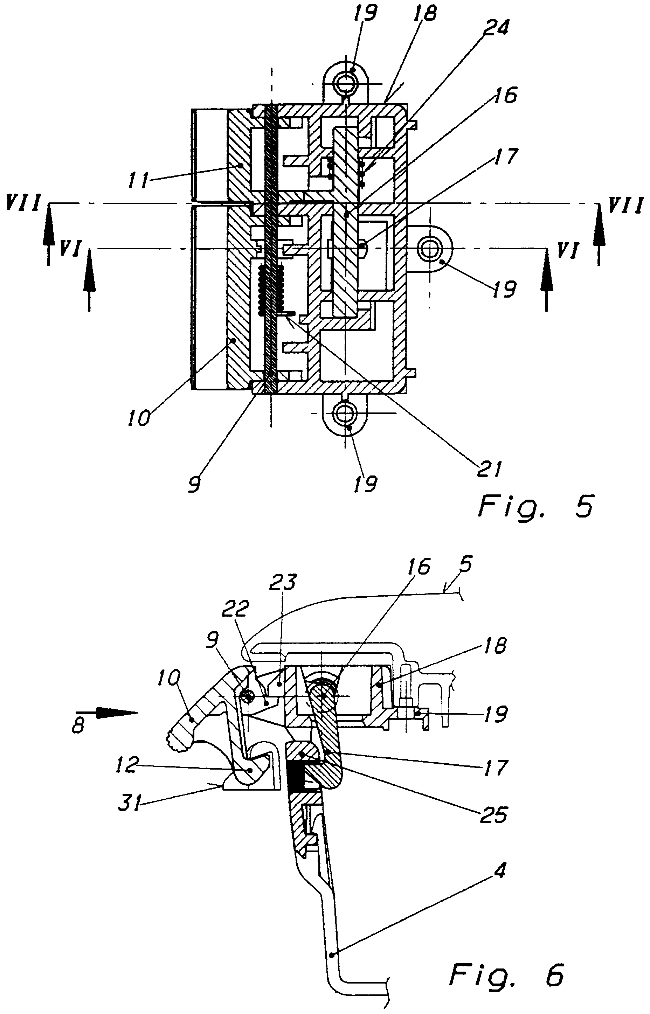

- Fig. 5: einen Schnitt folgend der Linie V - V nach Fig. 3,
- Fig. 6: einen Schnitt folgend der Linie VI - VI nach Fig. 5,

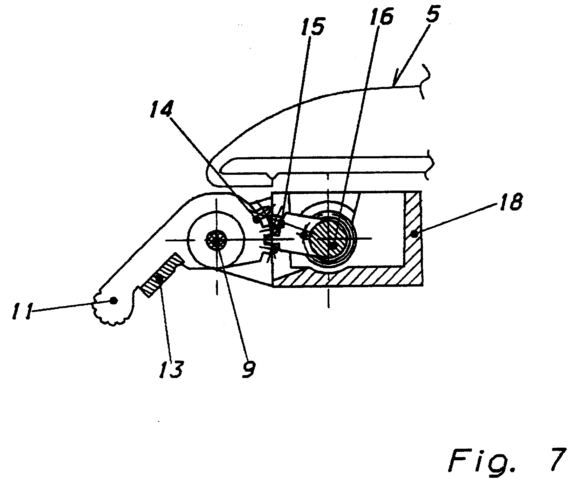

- Fig. 7: einen Schnitt folgend der Linie VII - VII nach Fig. 5 und
- Fig. 8: einen Schnitt etwa folgend der Linie VIII - VIII nach Fig. 1.

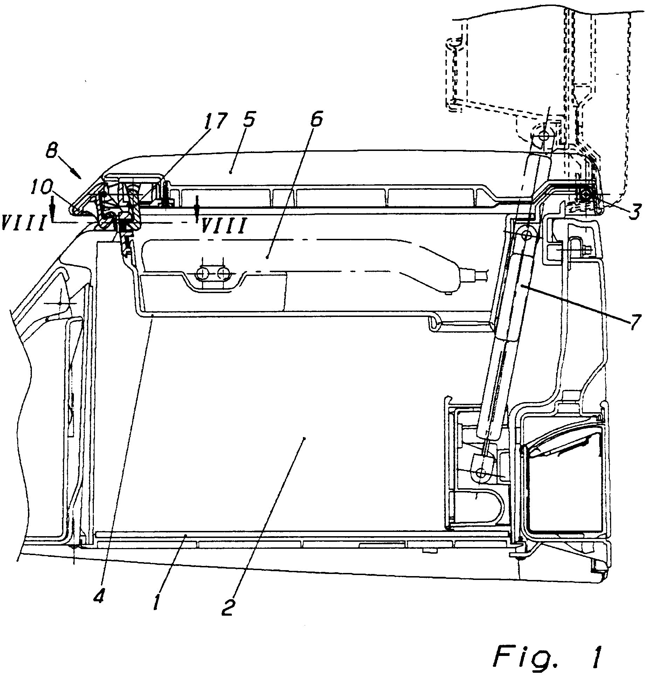

Die in Fig. 1 im Längsschnitt dargestellte Mittelkonsole kommt zwischen den Vordersitzen eines Fahrzeugs zur Anordnung und weist eine Höhenerstreckung auf, die bis etwa zum abgewinkelten Unterarm eines im Fahrzeug Sitzenden reicht. Die Mittelkonsole ist mit einem nur teilweise dargestellten Grundkörper 1, an dem sich vorderendig eine Schaltkulisse u.dgl. anschließen kann, ausgebildet, der ein nach oben offenes Ablagefach 2 aufweist.

An dem Grundkörper 1 sind über eine Gelenkachse 3 ein Abdeckteil 4 und eine Armlehne 5 klappbeweglich angelenkt. Dabei ist Vorsorge dafür getroffen, daß einmal die Armlehne 5 für sich alleine und einmal die Armlehne zusammen mit dem Abdeckteil hochgeklappt werden kann.

Das Abdeckteil 4 weist eine schalenförmige Ausbildung auf und ist insbesondere zur Aufnahme eines Autotelefons 6 vorgesehen. Das gemeinsame Aufklappen von Armlehne 5 und Abdeckteil 4 wird durch eine Gasdruckfeder 7 unterstützt.

Zum Aufklappen der Armlehne 5 wie auch zum Aufklappen der Armlehne 5 nebst Abdeckteil 4 bedarf es der Betätigung einer insgesamt mit 8 bezeichneten Verriegelungsvorrichtung. Ein wesentlicher Teil der Verriegelungsvorrichtung 8 ist am vorderendigen Bereich der Armlehne 5 angeordnet. Dieser Teil der Verriegelungsvorrichtung umfaßt zwei an der Armlehne 5 nebeneinander auf einem Gelenkstift 9 schwenkbeweglich gelagerte Griffhebel 10 und 11, von denen der erste 10 mit einer Sperrklinke 12 ausgebildet ist, während der zweite 11 mit einem Mitnehmer 13 für den ersten Griffhebel 10 und hinterendig mit einem Zahnsegment 14 ausgebildet ist. Das Zahnsegment 14 kämmt mit dem Zahnsegment 15 einer parallel zum Gelenkstift 9 ausgerichteten Welle 16, die eine Klinke 17 trägt. Die an der Armlehne 5 angeordneten Teile der Verriegelungsvorrichtung 8 sind in einem Aufnahmegehäuse 18 untergebracht, das über Anschraubböckchen 19 verfügt, um dasselbe an der Armlehne 5, z.B. mittels Schrauben 20 befestigen zu können. In dem Aufnahmegehäuse 18 ist der Gelenkstift 9 verdrehfest angeordnet, so daß die Griffhebel 10 und 11 um den Gelenkstift herum verschwenkt werden können. Das Verschwenken der Griffhebel 10 und 11 erfolgt gegen die Kraft einer auf dem Gelenkstift 9 sitzenden Rückstellfeder 21, wobei die Ausgangslage der Griffhebel 10 und 11 durch einen Nocken 22 am Griffhebel 10 und einen Anschlag 23 am Aufnahmegehäuse 18 definiert wird.

Die Welle 16 ist drehbeweglich im Aufnahmegehäuse 18 gelagert und trägt eine Rückstellfeder 24 zum Zurückführen des Griffhebels 11 in die Ausgangslage. Ein Hochschwenken des Griffhebels 10 bewirkt lediglich eine gleichgerichtete Schwenkbewegung der Sperrklinke 12. Dagegen bewirkt ein Hochschwenken des Griffhebels 11 über den Mitnehmer 13 zunächst ein gleichzeitiges Hochschwenken des Griffhebels 10 nebst Ausschwenkbewegung der Sperrklinke 12 und über die Zahnsegmente 14 und 15 eine Drehbewegung der Welle 16 und damit eine der Schwenkbewegung der Sperrklinke 12 entgegengesetzte Ausschwenkbewegung der Klinke 17.

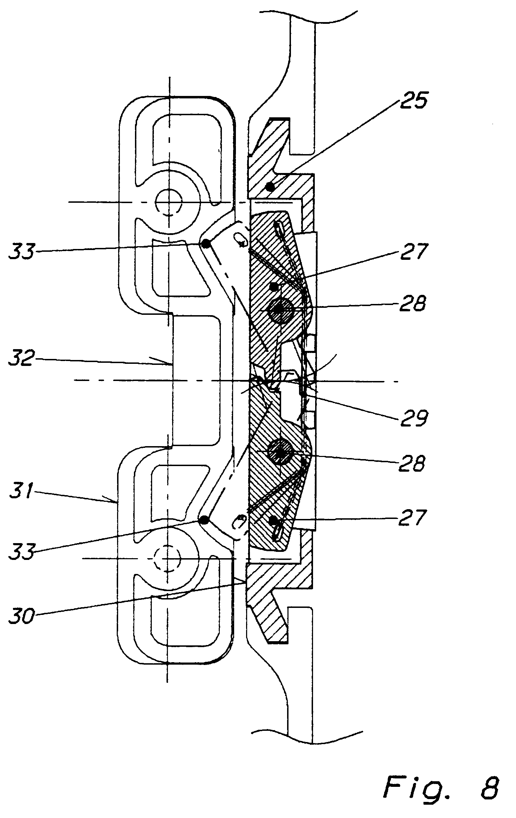

Der am vorderseitigen Endbereich des Abdeckteils angeordnete Teil der Verriegelungsvorrichtung 8 besteht aus einem Aufnahmegehäuse 25, das durch eine Klipsverrastung 26 am Abdeckteil 4 festgelegt ist. In dem Aufnahmegehäuse 25 sind zwei baugleiche Nocken 27 schwenkbeweglich gelagert, und zwar um Schwenkachsen 28, die senkreicht zum Gelenkstift 9 und zur Welle 16 ausgerichtet sind. Die Nocken 27 greifen einendig zahnsegmentartig ineinander, so daß das Verschwenken des einen Nockens zwangsläufig auf den anderen übertragen wird. Die Nocken 27 sind durch eine sie gemeinsam beaufschlagende Feder 29 belastet, wobei die Feder 29 bemüht ist, die Nocken 27 mit ihren freien Enden voran aus dem Stirnende 30 des Aufnahmegehäuses 25 herauszuschwenken, wie dies in Fig. 8 mit strichpunktierten Linien gezeigt ist.

Zur Verriegelungsvorrichtung 8 gehört schließlich noch ein am Grundkörper 1 befestigter Schloßriegel 31, der eine vorderseitige Rastausnehmung 32 und eine zweigeteilte rückseitige Rastausnehmung 33 aufweist.

In der Gebrauchslage der Armlehne 5 ist das Ablagefach 2 des Grundkörpers 1 durch das Abdeckteil 4 verschlossen und auch das Abdeckteil 4 ist durch die darüber geklappte Armlehne 5 nicht zugänglich. In dieser Grundstellung ist die Armlehne 5 am Grundkörper 1 gehalten, indem die Sperrklinke 12 des Griffhebels 10 in die vorderseitige Rastausnehmung des Schloßriegels 31 eingeklinkt und in dieser Stellung durch die Rückstellfeder 21 gehalten ist. Gleichzeitig ist in dieser Grundstellung das Abdeckteil 4 an der Armlehne 5 festgelegt, weil die Klinke 17 in das Gehäuse 25 eingreift und hierbei die Nocken 27 außer Eingriff mit der rückseitigen Rastausnehmung 33 des Schloßriegels 31 hält.

Zum Hochklappen der Armlehne 5 nebst Abdeckteil 4 wird lediglich der Griffhebel 10 nach oben geschwenkt und gleichzeitig die Sperrklinke 12 ausgeklinkt. Die Armlehnen-Abdeck-Einheit kann hiernach, unterstützt durch die Gasdruckfeder 7 nach oben geklappt werden. Die Verriegelung zwischen der Armlehne 5 und dem Abdeckteil 4 bleibt hiervon unberührt, weil die Lage der Klinke 17 unverändert beibehalten wird.

Soll hingegen nur die Armlehne 5 zwecks Freigabe des Abdeckteils 4 hochgeklappt werden, ist der Griffhebel 11 nach oben zu schwenken, wobei es zur Mitnahme des Griffhebels 10 und zum Ausklinken der Sperrklinke 12 kommt. Gleichzeitig wird die Griffhebelbetätigung über die Zahnsegmente 14 und 15 auf die Welle 16 und damit auf die Klinke 17 übertragen, die aus dem Aufnahmegehäuse 25 herausschwenkt und damit die Nocken 27 freigibt. Die Nocken 27 können damit , belastet durch die Feder 29, augenblicklich in die rückseitigen Rastausnehmungen 33 des Schloßriegels 31 einschwenken und damit das Abdeckteil 4 am Grundkörper 1 festlegen. Die Verriegelung zwischen dem Abdeckteil 4 und dem Grundkörper 1 wird durch Herunterklappen der Armlehne und das dadurch erfolgende Einklinken der Sperrklinken 12 und 17 augenblicklich wieder gelöst.

## Patentansprüche

1. Mittelkonsole für Fahrzeuge mit einem als nach oben offenes Ablagefach (2) ausgebildeten Grundkörper (1), einem am Grundkörper (1) angelenkten Abdeckteil (4) einer Verriegelungsvorrichtung (8), die nach dem Lösen ein Aufklappen des Abdeckteils (4) erlaubt, einer das Abdeckteil (4) übergreifenden Armlehne (5), die ebenfalls nach dem Lösen einer Verriegelungsvorrichtung (8) aufklappbar ist, einer Drehachse (3) für das Abdeckteil (4) und mit einer parallel zur Drehachse (3) verlaufenden oder mit dieser zusammenfallenden Drehachse für die Armlehne (5), wobei die Armlehne (5) wahlweise für sich alleine oder zusammen mit dem Abdeckteil (4) klappbar ist, dadurch gekennzeichnet, daß eine Verriegelungsvorrichtung (8) vorgesehen ist, die bei heruntergeklappter Lage von Abdeckteil (4) und Armlehne (5) eine lösbare Festlegung der Armlehne (5) am Grundkörper (1) und gleichzeitig eine lösbare Festlegung des Abdeckteils (4) an der Armlehne (5) ermöglicht und daß durch ein Lösen der Verriegelung zwischen dem Abdeckteil (4) und der Armlehne (5) gleichzeitig eine Verriegelung zwischem dem Abdeckteil (4) und dem Grundkörper (1) herstellbar ist.

2. Mittelkonsole nach Anspruch 1, dadurch gekennzeichnet, daß die Verriegelungsvorrichtung (8) einen am Grundkörper (1) angeordneten Schloßriegel (31) mit einer vorderseitigen (32) und einer rückseitigen Rastausnehmung (33), zwei an der Armlehne (5) nebeneinander auf einem Gelenkstift (9) schwenkbeweglich gelagerte Griffhebel (10,11)sowie zumindest einen am Abdeckteil (4) schwenkbeweglich gelagerten Nocken (27) umfaßt, und daß der erste Griffhebel (10) eine in die vorderseitige Rastausnehmung (32) einschwenkbare Sperrklinke (12) aufweist, während der zweite Griffhebel (11) mit einem Mitnehmer (13) für den ersten Griffhebel (10) und hinterendig mit einem Zahnsegment (14) ausgebildet ist, das mit dem Zahnsegment (15) einer parallel zum Gelenkstift (9) der Griffhebel (10,11) ausgerichteten Welle (16) kämmt, die eine Klinke (17) trägt, welche in eine Rastausnehmung (34) im Abdeckteil (4) einschwenkbar ist, um dabei den zumindest einen Nocken (27) zu beaufschlagen und außer Eingriff mit der rückseitigen Rastausnehmung (33) des Schloßriegels (31) zu halten.

3. Mittelkonsole nach Anspruch 1 oder 2, dadurch gekennzeichnet, daß die Griffhebel (10,11), der zumindest eine Nocken (27) und die die Klinke (17) tragende Welle (16) jeweils gegen die Kraft von Rückstellmitteln, wie Rückstellfedern (21,24,29)betätigbar sind.

4. Mittelkonsole nach zumindest einem der Ansprüche 1 bis 3, dadurch gekennzeichnet, daß das Abdeckteil (4) und die Armlehne (5) jeweils um die hintere Kante klappbar sind und jeweils am vorderen Ende die Elemente der Verriegelungsvorrichtung (8) tragen, wobei die Klappachse (3) von Abdeckteil (4) und Armlehne (5) parallel zum Gelenkstift (9) der Griffhebel (10,11) verlaufen, während die Schwenkachse (28) für den zumindest einen Nocken (27) hierzu senkrecht ausgerichtet ist.

5. Mittelkonsole nach zumindest einem der Ansprüche 1 bis 4, dadurch gekennzeichnet, daß die Griffhebel (10,11), der Gelenkstift (9), die das Zahnsegment (15) sowie die Klinke (17) tragende Welle (16) und die Rückstellmittel für die Griffhebel (10,11) und Welle (16) gemeinsam in einem an der Armlehne (5) befestigten Aufnahmegehäuse (18) angeornet sind.

6. Mittelkonsole nach zumindest einem der Ansprüche 1 bis 5, dadurch gekennzeichnet, daß zwei in die rückseitige Rastausnehmung (33) des Schloßriegels (31) einschwenkbare Nocken (27) vorgesehen sind, die auf Lagerstiften (28) in einem Aufnahmegehäuse (25) zusammen mit einer die Nocken (27) in Richtung Rastausnehmung (33) belastenden Rückstellfeder (29) angeordnet sind.

7. Mittelkonsole nach zumindest einem der Ansprüche 1 bis 6, dadurch gekennzeichnet, daß die Nocken (27) als längliche, baugleiche Formkörper ausgebildet und mit jeweils einem Stirnende zahnsegmentartig aneinandergekuppelt sind und daß die freien Endbereiche der Nocken (27) in die Rastausnehmung (33) des Schloßriegels (31) einschwenkbar sind.

## Claims

1. Centre console for vehicles, with a basic body (1) designed as an upwardly open tray (2), a covering part (4) articulated on the basic body (1), a locking device (8) which, after release, permits the covering part (4) to be swung up, an armrest (5) which engages over the covering part (4) and can be swung up, likewise after release of a locking device (8), a rotational axis (3) for the covering part (4) and with a rotational axis for the armrest (5), said axis running parallel to the rotational axis (3) or coinciding with the latter, it being possible for the armrest (5) to be swung either on its own or together with the covering part (4), characterized in that a locking device (8) is provided which, in the swung-down position of the covering part (4) and armrest (5), enables the armrest (5) to be fastened releasably to the basic body (1) and, at the same time, enables the covering part (4) to be fastened releasably to the armrest (5), and in that, by release of the lock between the covering part (4) and the armrest (5), a lock between the covering part (4) and the basic body (1) can simultaneously be produced.

2. Centre console according to Claim 1, characterized in that the locking device (8) comprises a lock bolt (31) which is arranged on the basic body (1) and has a front-side latching recess (32) and a rear-side latching recess (33), two gripping levers (10, 11) mounted pivotably on the armrest (5) next to one another on an articulated pin (9), and at least one cam (27) mounted pivotably on the covering part (4), and in that the first gripping lever (10) has a retaining pawl (12) which can be pivoted into the front-side latching recess (32), whilst the second gripping lever (11) is designed with a driver (13) for the first gripping lever (10) and, at the rear end, with a toothed segment (14) which meshes with the toothed segment (15) of a shaft (16) which is aligned parallel to the articulated pin (9) of the gripping levers (10, 11) and bears a pawl (17) which can be pivoted into a latching recess (34) in the covering part (4) in order, in the process, to act upon the at least one cam (27) and to keep it disengaged from the rear-side latching recess (33) of the lock bolt (31).

3. Centre console according to Claim 1 or 2, characterized in that the gripping levers (10, 11), the at least one cam (27) and the shaft (16) bearing the pawl (17) can each be operated counter to the force of restoring means, such as restoring springs (21, 24, 29).

4. Centre console according to at least one of Claims 1 to 3, characterized in that the covering part (4) and the armrest (5) can in each case be swung around the rear edge and in each case at the front end bear the elements of the locking device (8), the swinging axes (3) of the covering part (4) and armrest (5) running parallel to the articulated pin (9) of the gripping levers (10, 11), whilst the pivot axis (28) for the at least one cam (27) is aligned perpendicularly thereto.

5. Centre console according to at least one of Claims 1 to 4, characterized in that the gripping levers (10, 11), the articulated pin (9), the shaft (16) which bears the toothed segment (15) and the pawl (17), and the restoring means for the gripping levers (10, 11) and shaft (16) are arranged together in a receiving housing (18) attached to the armrest (5).

6. Centre console according to at least one of Claims 1 to 5, characterized in that two cams (27) are provided which can be pivoted into the rear-side latching recess (33) of the lock bolt (31) and are arranged on bearing pins (28) in a receiving housing (25) together with a restoring spring (29) which loads the cams (27) in the direction of the latching recess (33).

7. Centre console according to at least one of Claims 1 to 6, characterized in that the cams (27) are designed as elongate, constructionally identical shaped elements and are coupled to one another in each case at a front end in the manner of toothed segments, and in that the free end regions of the cams (27) can be pivoted into the latching recess (33) of the lock bolt (31).

## Revendications

1. Console centrale pour véhicule automobile avec un corps de base (1) conçu en tant que compartiment de rangement (2) ouvert vers le haut, un couvercle (4), articulé sur le corps de base (1), d'un dispositif de verrouillage (8), qui après déverrouillage permet d'ouvrir le couvercle (4), un accoudoir (5) passant sur le couvercle (4), qui également après déverrouillage d'un dispositif de verrouillage (8) peut être relevé, un axe de rotation (3) pour le couvercle (4) et avec un axe de rotation parallèle à l'axe de rotation (3) ou coïncidant avec celui-ci pour l'accoudoir (5), l'accoudoir (5) pouvant être relevé indépendamment ou avec le couvercle (4), caractérisée en ce qu'il est prévu un dispositif de verrouillage (8) qui, en position rabattue vers le bas du couvercle (4) et de l'accoudoir (5), permet un blocage amovible de l'accoudoir (5) sur le corps de base (1) et simultanément une fixation amovible du couvercle (4) sur l'accoudoir (5) et en ce que par suppression du verrouillage entre le couvercle (4) et l'accoudoir (5) il est possible de réaliser simultanément un verrouillage entre le couvercle (4) et le corps de base (1).

2. Console centrale selon la revendication 1, caractérisée en ce que le dispositif de verrouillage (8) comprend un verrou (31), placé sur le corps de base (1), avec une encoche avant (32) et une encoche arrière (33), deux leviers de prise (10, 11) montés côte à côte sur l'accoudoir (5), pivotant sur un doigt d'articulation (9) ainsi qu'au moins une came (27) montée pivotante sur le couvercle (4), et en ce que le premier levier de prise (10) comporte un cliquet de blocage (12) pouvant pivoter dans l'encoche avant (32), tandis que le second levier de prise (11) présente un entraîneur (13) pour le premier levier de prise (10) et à l'extrémité arrière un segment denté (14), qui engrène avec le segment denté (15) d'un arbre (16) parallèle au doigt d'articulation (9) du levier de prise (10, 11), lequel arbre porte un cliquet (17), qui peut pivoter à l'intérieur d'une encoche (34) pratiquée dans le couvercle (4), afin de solliciter dans ce cas au moins une came (27) et de la dégager de l'encoche arrière (33) du verrou (31).

3. Console centrale selon les revendications 1 ou 2, caractérisée en ce que les leviers de prise (10, 11), une came (27) au moins et l'arbre (16) portant le cliquet (17) peuvent être actionnés chacun à l'encontre de la force de moyens de rappel, tels que des ressorts de rappel (21, 24, 29).

4. Console centrale selon l'une au moins des revendications 1 à 3, caractérisée en ce que le couvercle (4) et l'accoudoir (5) peuvent être rabattus chacun autour du bord arrière et portent chacun à l'extrémité avant les éléments du dispositif de verrouillage (8), l'axe de rabattement (3) du couvercle (4) et de l'accoudoir (5) étant parallèles au doigt d'articulation (9) des leviers de prise (10, 11), tandis que l'axe de pivotement (28) pour au moins une came (27) est perpendiculaire à celui-ci.

5. Console centrale selon l'une au moins des revendications 1 à 4, caractérisée en ce que les leviers de prise (10, 11), le doigt d'articulation (9), l'arbre portant le segment denté ainsi que le cliquet (17) et les moyens de rappel pour les leviers de prise (10, 11) et l'arbre (16) sont placés conjointement dans un boîtier de logement (18) fixé sur l'accoudoir (5).

6. Console centrale selon l'une au moins des revendications 1 à 5, caractérisée en ce que sont prévues deux cames (27) pouvant pivoter dans l'encoche arrière (33) du verrou (31), qui sont placées sur des tiges d'appui (28) dans un boîtier de logement (25) conjointement avec un ressort de rappel (29) sollicitant les cames (27) en direction de l'encoche (33).

7. Console centrale selon l'une au moins des revendications 1 à 6, caractérisée en ce que les cames (27) sont des corps façonnés allongés, de construction identique, et sont accouplées l'une à l'autre à la manière de segments dentés, avec chacune une extrémité frontale, et en ce que les zones d'extrémité libre des cames (27) peuvent pivoter dans l'encoche (33) du verrou (31).
